# EUROPEAN PATENT SPECIFICATION

(11) **EP 2 258 508 B1**
(45) Date of publication and mention of the grant of the patent: **13.08.2014**
(21) Application number: 10158659.2
(22) Date of filing: 31.03.2010
(51) Int. Cl.: B23K 9/20, B23K 11/00, B21J 15/32, B23P 19/00

(54) **Head arrangement for joining component with a hinged component holder ; Method of feeding a component to a hinged component holder**
Kopfanordnung zum Verbinden von Teilen mit einem gelenkten Teilhalter; Verbindungsverfahren zum Versorgen eines Teiles zu einem gelenkten Teilhalter
Agencement de tête d'assemblage de pièces avec un dispositif de maintien de pièces articulé ; Procédé d'approvisionnement de pièce vers un dispositif de maintien de pièces articulé

(30) Priority: 02.06.2009 DE 102009023453
(43) Date of publication of application: 08.12.2010
(73) Proprietor: Newfrey LLC, Newark, Delaware 19711 (US)
(72) Inventor: Obermann, Wolfgang, 35394 Giessen (DE)
(74) Representative: Witte, Weller & Partner Patentanwälte mbB

(56) References cited:
- GB-A- 2 094 202
- US-A- 3 658 230
- US-A- 5 172 467
- US-A- 6 018 863
- US-A1- 2007 051 718
- US-A1- 2007 067 975

## Description

The present invention relates to a joining head arrangement for joining components to workpieces, and to a method of feeding a component to a component holder and of joining the component along a joining axis to a workpiece according to the preamble of claims 1 and 10 respectively (see, for example, US 6 018 863).

A joining head arrangement is known from document EP 1 495 828 B1.

The expression "joining" is intended in the present context to relate to all connecting methods of elements such as fastening elements to workpieces, such as metal sheets, including adhesive bonding, forming, such as riveting for example, or combining of materials, such as welding for example. In particular, the expression "joining" is intended in the present case to relate to the joining of rotationally symmetrical components, such as studs, to workpieces, which are to be connected to the respective workpiece, for example, by short-time arc welding (stud welding) and/or by thermoplastic connecting processes such as thermoplastic adhesive bonding or thermoplastic welding.

The components can be studs which have a shank and a head or flange section having a somewhat larger diameter than the shank.

In the field of stud welding, that is to say the welding of metallic studs to sheets, it is known to feed the studs to a joining head arrangement in an automated manner by a feed device.

In the joining head arrangement which is known from abovementioned document EP 1 495 828 B1, singulated studs are fed to the joining head arrangement by compressed air. The stud holder is designed as a collet which can be expanded to a diameter equal to at least the flange diameter. The studs are fed from the rear, with the flange section in front, into the holding device until the flange section emerges axially from the collet and the collet still holds the shank of the stud. Proceeding from this position, a stud welding operation can then be carried out, which can comprise the steps of putting the flange section onto the workpiece, directing a pilot current through the stud and the workpiece, then lifting the stud from the workpiece in order to draw an arc, switching over to a welding current, such that those surfaces of the flange section and the workpiece which are opposite one another are fused, and finally lowering the stud onto the workpiece again until the arc is extinguished. The welding current is switched off approximately at the same time, such that the complete melt pool solidifies and the stud is integrally connected to the workpiece.

A problem with the above joining head arrangement is that the component holder is subjected to considerable wear. This is due to the fact that the elastic damping elements of the component holder are overstretched by the relatively large cross section of the flange section.

A further joining head arrangement is known from document DE 102 23 147 A1. In this joining head arrangement, a housing on which a slide is mounted in a linearly movable manner is mounted on an elongated arm in a rotatable manner. The feed device is fixed to the arm and ends in a transfer station. The housing can be rotated with respect to the arm in such a way that a stud readied at the transfer station is received there in order to subsequently carry out a joining operation with the received stud and after rotation back into a joining position. In this joining head arrangement, the cycle times are relatively long. Further, the component holder is designed relatively complex in order to be able to reliably receive the stud readied at the transfer station. Further joining head arrangements according to the preamble of claim 1 are shown in document US 6 018 863 A and US 2007/0067975 A1. Furthermore, document US 3 658 230 A shows an automatic blind riveting machine comprising a pivotable head.

Against the above background, the object of the invention is to specify a joining head arrangement and a joining method with which relatively short cycle times can be achieved.

The above object is achieved in the joining head arrangement as defined in claim 1.

The expression "skewed" should in this case be understood in its mathematical sense, i.e. the joining axis and the pivot axis therefore do not intersect one another and do not run parallel to one another.

Furthermore, the above object is achieved by a method of feeding a component to a component holder and of joining the component along a joining axis to a work-piece as defined in claim 10.

In this joining head arrangement or this joining method, it is especially advantageous that shorter cycle times than is the case during pivoting of the entire housing can be achieved on account of the small pivoting travel of the hinged element. Further, the pivoting by about 180° makes it possible to allow the components to simply fall into the component holder from the feed device at the transfer location.

It is especially advantageous that a transition of a welding current line from the slide to the hinged element is designed in such a way that the welding current line is disconnected when the component holder is located in the transfer position and closed when the component holder is located in a joining position. This ensures that the hinged element is free of welding current in the transfer position.

The object is therefore completely achieved.

Furthermore, it is advantageous if at least one feed device for feeding the component is provided, wherein the component is transferred at a transfer location from the feed device to the component holder, and the joining axis runs in such a way that the component holder can be pivoted between the transfer location and a joining position.

In this way, the component holder can be of very simple design. This applies in particular when studs having a flange section are joined. Said studs can be transferred with the shank in front into the component holder, such that overstretching of the stud holder can be avoided. The service life of the component holder can be substantially prolonged as a result.

It is especially advantageous if the transfer location is fixed with respect to the housing or the slide. It is especially preferred to fix said transfer location to the housing, since the feed device consequently does not have to be moved along in the region of the transfer location.

Furthermore, it is advantageous if a shaft is rotatably mounted on the slide, the hinged element being fixed to said shaft. The shaft in this case forms the pivot axis.

Furthermore, it is advantageous overall if a drive device for rotating the hinged element is fixed to the slide.

As a result, the rotation of the hinged element, for example by rotating the shaft, can be realized in a simple manner from a design point of view.

It is especially advantageous if the drive device has a pneumatic cylinder or the like. Alternatively, the drive device can have an electric motor, which can be designed as a stepping motor for example.

In addition, it is also advantageous if the electric motor is arranged concentrically to the shaft.

As a result, an output shaft of the electric motor can be connected directly to the shaft to which the hinged element is fixed.

The transition of the welding current can advantageously be provided by means of an electric contact spring-preloaded in the direction of the hinged element. In a simple manner in terms of design, the spring-preloaded contact makes a connection between the hinged element and the welding current line, wherein the connection provides a reliable current transfer and at the same time can be released and closed again in a simple manner and without wear. When the transition is closed, the contact is preferably covered by the hinged element, such that it cannot be contaminated by weld spatter.

It is especially advantageous if a sensor device is then provided which, in the transfer position, determines by means of an auxiliary voltage whether a component is present in the component holder. For this purpose, the component holder, in particular a chuck of the component holder, may comprise two segments electrically isolated from one another at least before the insertion of a component. In the transfer position, the hinged element is disconnected from the welding current line. Therefore the shaft which is rotatably mounted on the slide and to which the hinged element is fixed is designed to be electrically conductive in order to be able to apply the auxiliary voltage in a simple manner from the design point of view when the component holder is located in the transfer position. If the auxiliary voltage is applied and a metallic component, for example a stud, is located in the component holder or the chuck, a test current now flowing on account of the application of the auxiliary voltage can be detected by the sensor device.

This can prevent the subsequent steps of a joining method from being carried out, even though no component is located in the component holder.

In the method according to the invention, it is advantageous if the component is fed continuously through the feed passage into the component holder.

In this embodiment, in order to provide the component, no transfer station is provided at which the component stops and is then "fetched" by the respective component holder. On the contrary, in particular when the feed passage is aligned with the stud holder at the transfer location, a stud can be transferred directly, without an intermediate stop, into the component holder, for example by compressed air or the like.

Due to this measure, the component holder can be designed in a simple manner, for example as an essentially cylindrical collet into which a shank of the stud is inserted. Such a cylindrical stud holder can be formed with at least one longitudinal slot, preferably with a plurality of longitudinal slots, in order to provide the requisite radial elasticity.

Alternatively, to further increase the cycle time, when the component holder is pivoted into the joining position, at least one further component can be held ready at the transfer position. The component is then not fed continuously. However, a joining operation and a feed operation can be carried out essentially in parallel.

It goes without saying that the abovementioned features and the features still to be explained below can be used not only in the respectively specified combination but rather also in other combinations or on their own without departing from the scope of the present invention.

Exemplary embodiments of the invention are shown in the drawing and are described in more detail below. In the drawing:
- Fig. 1: shows a schematic view of a joining system having a joining head arrangement according to the invention, in a joining position;
- Fig. 2: shows the joining head arrangement shown in Figure 1, in a transfer position;
- Fig. 3: shows a schematic view of an alternative embodiment of a joining head arrangement according to the invention, in a joining position.

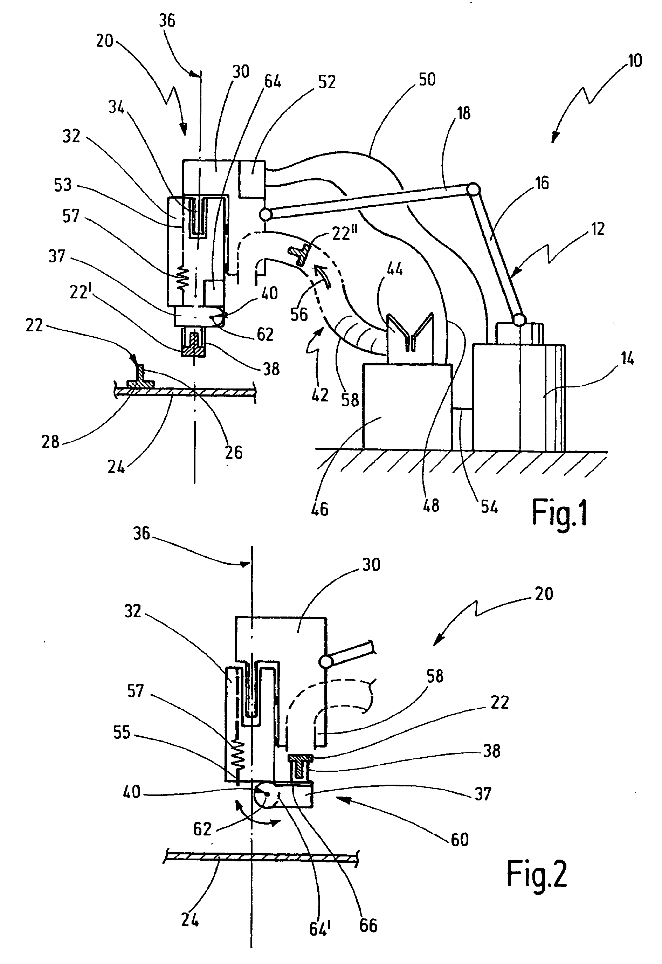

A joining system is designated generally by 10 in Fig. 1. In the present case, the joining system 10 is designed for stud welding by the drawn arc method. Alternatively, the joining system may also be designed for other joining processes, such as, for example, thermoplastic welding or adhesive bonding.

The joining system 10 contains a robot 12 having a fixed base 14, on which a first arm 16 is mounted in an articulated manner, on the free end of which arm 16 a second arm 18 is mounted in an articulated manner.

A joining head arrangement 20 is fixed to the free end of the second arm 18. However, the joining head arrangement 20 may also be part of a manually operable welding gun or the like.

The joining head arrangement 20 can be moved to various locations by means of the robot 12. Preferably, but not exclusively, such a joining system is used in motor vehicle technology, to be precise for joining studs to body sheets. Studs fixed to the body sheet in such a way can be used as anchors for plastic clips for fastening conduits or the like, or for latching attachments in place, such as panelling, etc.

Shown in Fig. 1 is a workpiece 24 in the form of a sheet, to which a component 22 in the form of a stud has been joined by means of the joining system 10. The stud comprises a shank 26 and a flange section 28 having a larger diameter. The stud is in this case joined to the workpiece 24 in such a way that the shank 26 projects approximately perpendicularly from a surface of the workpiece and can consequently serve as a fastening element, for example as an anchor or the like.

The joining head arrangement 20 contains a housing 30 which is fixed to the free end of the second arm 18. A slide 32 is mounted on the housing 30 in a linearly displaceable manner. Also provided on the housing 30 is a schematically shown linear drive 34, by means of which the slide 32 can be moved parallel to a guide axis 36 with respect to the housing 30. The linear drive 34 may be an electric linear motor; however, the linear drive 34 may also contain a mechanical drive such as a spring.

A hinged element 37 is mounted on the slide 32 such as to be pivotable about a pivot axis 40. The pivot axis 40 is skewed relative to the joining axis 36 and is oriented transversely, in particular perpendicularly, to the joining axis 36.

A component holder 38 in the form of a stud holder is fixed to the hinged element 37. In Fig. 1, the hinged element 37 is located in a joining position in which the component holder 38 holds a stud 22', which is the next to be joined to the workpiece 24.

A feed device 42 for feeding components 22 to the joining head arrangement 20 is connected to a singulation device 44 in which components 22 provided as free-flowing material are singulated and are then delivered individually from the fixed singulation device 44 to the joining head arrangement 20, for example by compressed air.

Furthermore, the joining system 10 contains a supply device 46 which can provide, for example, a welding voltage and control signals for operating the joining head arrangement 20. The supply device 46 is connected to a control device 52 in the housing 30 via a first cable harness 48. Furthermore, the control device 52 can be connected to the base 14 of the robot 12 via a second cable harness 50. The supply device 46 and the base 14 can also be connected to one another via a third cable harness 54. The welding voltage required for the stud welding or the requisite welding current is provided via the first cable harness 48 and is directed to a contact 55 via a welding current line 53. The contact 55 is preloaded in the direction of the hinged element 37 by means of a spring element 57, such that firm bearing of the contact 55 against the hinged element 37 is ensured when the hinged element 37 is located in the joining position. Furthermore, the movements of the robot 12 and of the slide 32 are coordinated with respect to the housing 30 via the cable harness 48 and via the other cable harnesses.

In Fig. 2, the component holder 38 is rotated into a transfer position in which the component holder 38 is aligned with the feed device 42.

The feed device 42 contains a feed passage 58, for example in the form of a flexible tube, through which the components 22 can be delivered to the joining head arrangement 20 by means of air pressure 56, as indicated by a component 22". In the present case, the feed passage 58 is fixed to the housing 30 and ends in the region of a transfer location 60. The transfer location 60 is arranged in such a way that the component holder 38 can be aligned therewith by pivoting the hinged element 37 about the pivot axis 40. As a result, it is possible to deliver a component substantially continuously from the feed passage 58 by means of the compressed air 56 into the component holder 38 aligned therewith. In the process, the stud is delivered with the shank in front into the component holder 38, such that the clamping elements of the latter need not be expanded to the diameter of the flange section 28. The stud is then held in the component holder 38 by a radially elastic effect, as shown for the component 22' in Fig. 1. The feed passage 58 is in this case designed to be appropriately flexible, such that it can follow the movement of the housing 30 and thus of the transfer location 60.

From the position shown in Fig. 2, the hinged element 37 together with the component holder 38 is subsequently pivoted into the joining position, as indicated by an arrow. The joining position may be oriented, for example, diametrically relative to the transfer location, such that the hinged element 37 together with the component holder 38 is shifted by 180° about the pivot axis 40. In the joining position, the component 22' is then already held in the correct position, such that the slide 32 can subsequently be shifted with respect to the housing 30 in order to put the component 22' onto the surface of the workpiece 24. A pilot current is then directed through the contact 55, the component holder 38, the component 22' held thereon and through the workpiece 24. After that, the component 22' is lifted again from the surface of the workpiece 24 by means of the slide 32, such that an arc is struck. The electric current is then increased to a welding current, which may be within the region of > 1000 A. In the process, those surfaces of the component 22' and of the workpiece 24 which are opposite one another are fused. The slide 32 is then lowered again onto the workpiece 24 by means of the linear drive 34, such that the molten pools intermix. The welding current is switched off. The complete molten pool solidifies, such that the component 22' is then integrally connected to the workpiece 24.

The slide 32 is then moved back, and the hinged element 37 together with the component holder 38 is rotated again into the transfer position in order to receive a new component 22". A joining operation in the form of a stud welding process is then carried out again.

The hinged element 37 is fixed to a shaft 62 which is rotatably mounted on the slide 32. A pneumatic cylinder 64, which is indicated schematically in Fig. 1, can be provided for pivoting the hinged element 37. Alternatively, a drive device can be formed by an electric motor 64' which is arranged concentrically to the shaft (as indicated schematically in Fig. 2).

The shaft 62 which is rotatably mounted on the slide 32 and arranged concentrically to the pivot axis 40 is preferably electrically conductive. In the hinged element 37, an electrically conductive connection is provided between the sensor arrangement 66 and the shaft 62. The component holder 38 comprises at least two segments which are electrically isolated from one another and which are each electrically conductive, such that an auxiliary voltage for checking for the presence of a component 22 in the component holder 38 can be applied via the shaft 62 and the component holder 38. To transfer the auxiliary voltage from the housing 30 or the slide 32 to the shaft 62, a sliding contact can be provided, or a contact arrangement which can be closed and released can be provided, such that a contact is always made when the hinged element 37 is located in the transfer position.

The transfer of the welding current to the hinged element 37 and the component holder 38 is effected as described above by means of the welding current line 53 and the contact 55. Alternatively, provision may of course also be made for a sliding contact or a contact arrangement to be provided for transferring the welding current from the housing 30 or the slide 32 via the shaft 62 to the hinged element 37 and the component holder 38. Said contact arrangement can then be closed and released in such a way that a contact is always made when the hinged element 37 is in a joining position.

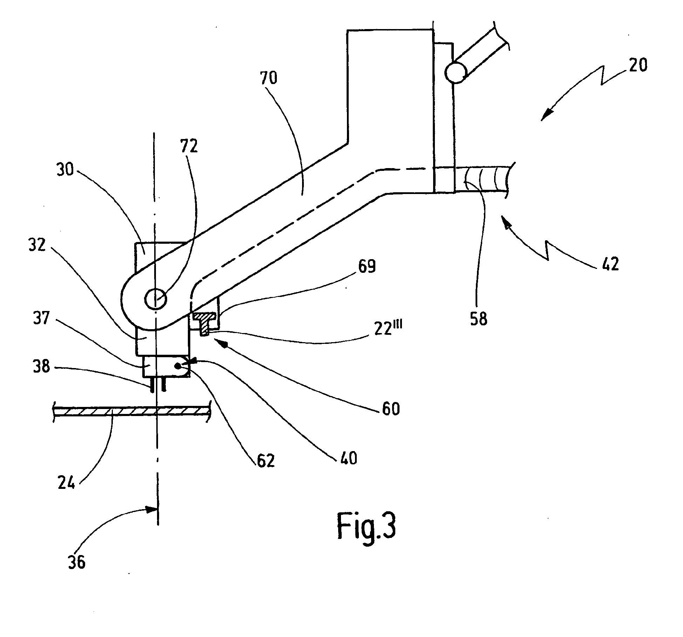

Shown in Figure 3 is a further embodiment of the joining head arrangement according to the invention, which generally corresponds to the joining head arrangement 20 of Fig. 1 with regard to construction and functioning. The same elements are therefore provided with the same designations. The differences are essentially explained below.

The joining head arrangement 20 has a rigid elongated arm 70, on the end of which a housing 30 is mounted such as to be rotatable about a head rotation axis 72. A slide 32 can in turn be moved on the housing 30 such as to be axially displaceable parallel to the joining axis 36, as in the above embodiments. This arrangement offers the advantage that the housing 30 can be pivoted together with the slide 32 about the head rotation axis 72 in order to enable components 22 to be joined even in positions where access is difficult.

In this embodiment, the components 22 are fed along the arm 70 via the feed device 42. There, the studs or components 22 are stopped and readied in a transfer station 69 located at the transfer station 60, as shown in Fig. 3 for the component 22"'. To receive a component, the hinged element 37 is pivoted about the pivot axis 40 into the transfer position and if need be the slide 32 is moved in such a way that the component 22"' can be transferred.

In all the embodiments, the components 22 can be fed into the component holder 38 in two steps, that is to say not continuously. First of all, a component is fed into the transfer station 69. In a second step, the component is transferred from the transfer station 69 into a respective component holder 38. A corresponding mechanism is to be provided for this purpose. If need be, the transfer in the component holder 38 can also be effected by the component holder 38 being aligned with the transfer station 69 and then by the slide 32 being moved in order to push the respective stud holder onto the component 22 readied at the transfer station 69. Alternatively, the component holder 38 may also be designed as a collet which in the opened state can be directed over the shank of a component 22 which is readied in the transfer station 69. In particular, in the case of this feed in two steps, the first step can be carried out while a joining process is being carried out and the component holder 38 is located in a joining position, and therefore the number of cycles of the joining system 10 can be increased by this parallel procedure.

Alternatively, the components 22 may of course also be fed continuously into the component holder 38 by the hinged element 37 first of all being pivoted into the transfer position and by the component 22 then being delivered continuously through the feed passage 58, for example by air pressure 56, into the component holder 38 arranged on the hinged element 37.

## Claims

1. Joining head arrangement (20) for joining components (22) to workpieces (24), comprising a housing (30) and a slide (32) which is mounted on the housing (30) and which is movable parallel to a joining axis (36) relative to the housing (30), and comprising at least one component holder (38) on which a component (22) can be held concentrically to the joining axis (36) during a joining operation, wherein the component holder (38) is arranged on a hinged element (37) which is pivotable on the slide (32) about a pivot axis (40) which is oriented transversely to the joining axis (36), wherein the pivot axis (40) is skewed relative to the joining axis (36), i.e. the pivot axis (40 and the joining axis (36) do not intersect one another and do not run parallel to one another, wherein a feed passage (58) is fixed to the housing (30), **characterized in that** the hinged element (37) can be pivoted by about 180° between the joining position and the transfer location (60), in which the component holder (38) is aligned with the feed passage (58), and wherein a transition of a welding current line (53) from the slide (32) to the hinged element (37) is designed in such a way that the welding current line (53) is disconnected when the component holder (38) is located in the transfer position and closed when the component holder (38) is located in a joining position.

2. Joining head arrangement according to Claim 1, in which at least one feed device (42) for feeding the component (22) is provided, wherein the component (22) is transferred at a transfer location (60) from the feed device (42) to the component holder (38), and in which the joining axis (36) runs in such a way that the component holder (38) can be pivoted between the transfer location (60) and a joining position.

3. Joining head arrangement according to Claim 1 or 2, wherein the transfer location (60) is fixed with respect to the housing (30) or the slide (32).

4. Joining head arrangement according to one of Claims 1 to 3, wherein a shaft (62) is rotatably mounted on the slide (32), the hinged element (37) being fixed to said shaft (62).

5. Joining head arrangement according to one of Claims 1 to 4, wherein a drive device (64) for rotating the hinged element (37) is fixed to the slide (32).

6. Joining head arrangement according to Claim 5, wherein the drive device (64') has an electric motor.

7. Joining head arrangement according to Claim 6, wherein the electric motor (64') is arranged concentrically to the shaft (62).

8. Joining head arrangement according to Claim 1, in which the transition is provided by means of a contact (55) spring-preloaded in the direction of the hinged element (37).

9. Joining head arrangement according to one of Claims 1 to 8, wherein a sensor device (66) is provided which, in the transfer position, determines by means of an auxiliary voltage whether a component (22) is present in the component holder (38).

10. Method of feeding a component (22) to a component holder (38) and of joining the component (22) along a joining axis (36) to a workpiece (24), **characterized by** the steps:
- pivoting a hinged element (37) on a slide (32) by about 180° into a transfer position (60) in which the component holder (38) is aligned with a feed passage (58), to be precise about a pivot axis (40) which is oriented transversely to the joining axis (36) and is skewed relative to the joining axis (36); i.e. the pivot axis (40) and the joining axis (36) do not intersect one another and do not run parallel to one another; and wherein a transition of a welding current line (53) from the slide (32) to the hinged element (37) is designed in such a way that the welding current line (53) is disconnected when the component holder (38) is located in the transfer position and closed when the component holder (38) is located in a joining position;
- feeding the component (22) through the feed passage (58) into the component holder (38);
- pivoting the hinged element (37) by about 180° into the joining position; and
- carrying out a joining operation, wherein the slide (32) is moved parallel to the joining axis (36).

11. Method according to Claim 10, wherein the component (22) is fed continuously through the feed passage (58) into the component holder (38).

12. Method according to Claim 10, wherein, when the component holder (38) is pivoted into the joining position, a further component (22) is held ready at the transfer position (60).

13. Method according to one of Claims 10 to 12, wherein, before the step of pivoting the hinged element (37) into the joining position, a step for checking whether a component (22) is present in the component holder (38) is carried out.

## Patentansprüche

1. Fügekopfanordnung (20) zum Fügen von Bauteilen (22) auf Werkstücke (24), mit einem Gehäuse (30) sowie einem an dem Gehäuse (30) gelagerten Schlitten (32), der parallel zu einer Fügeachse (36) relativ zu dem Gehäuse (30) bewegbar ist, mit wenigstens einem Bauteilhalter (38), an dem ein Bauteil (22) konzentrisch zu der Fügeachse (36) während eines Fügevorganges gehalten werden kann, wobei der Bauteilhalter (38) an einem Klappelement (37) angeordnet ist, das an dem Schlitten (32) um eine Schwenkachse (40) schwenkbar ist, die quer zu der Fügeachse (36) ausgerichtet ist, wobei die Schwenkachse (40) relativ zu der Fügeachse (36) windschief verläuft, d.h. die Fügeachse und die Schwenkachse schneiden somit einander nicht und verlaufen nicht parallel zueinander, wobei ein Zuführkanal (58) an dem Gehäuse (30) festgelegt ist, **dadurch gekennzeichnet, dass** das Klappelement (37) um etwa 180° zwischen der Fügeposition und dem Übergabeort (60) verschwenkbar ist, in dem der Bauteilhalter (38) mit dem Zuführkanal (58) ausgerichtet ist, und wobei ein Übergang einer Schweißstromleitung (53) von dem Schlitten (32) zu dem Klappelement (37) derart ausgebildet ist, dass die Schweißstromleitung (53) getrennt ist, wenn sich der Bauteilhalter (38) in der Übergabeposition befindet, und geschlossen ist, wenn sich der Bauteilhalter (38) in einer Fügeposition befindet.

2. Fügekopfanordnung nach Anspruch 1, bei der wenigstens eine Zuführeinrichtung (42) zum Zuführen des Bauteils (22) vorgesehen ist, wobei das Bauteil (22) an einem Übergabeort (60) von der Zuführeinrichtung (42) an den Bauteilhalter (38) übergeben wird, und bei der die Fügeachse (36) derart verläuft, dass der Bauteilhalter (38) zwischen dem Übergabeort (60) und einer Fügeposition schwenkbar ist.

3. Fügekopfanordnung nach Anspruch 1 oder 2, wobei der Übergabeort (60) in Bezug auf das Gehäuse (30) oder den Schlitten (32) festgelegt ist.

4. Fügekopfanordnung nach einem der Ansprüche 1 bis 3, wobei an dem Schlitten (32) eine Welle (62) drehbar gelagert ist, an der das Klappelement (37) festgelegt ist.

5. Fügekopfanordnung nach einem der Ansprüche 1 bis 4, wobei eine Antriebseinrichtung (64) zum Verdrehen des Klappelements (37) an dem Schlitten (32) festgelegt ist.

6. Fügekopfanordnung nach Anspruch 5, wobei die Antriebseinrichtung (64') einen elektrischen Motor aufweist.

7. Fügekopfanordnung nach Anspruch 6, wobei der elektrische Motor (64') konzentrisch zu der Welle (62) angeordnet ist.

8. Fügekopfanordnung nach Anspruch 1, bei der der Übergang mittels eines in Richtung des Klappelements (37) federvorgespannten Kontaktes (55) bereitgestellt ist.

9. Fügekopfanordnung nach einem der Ansprüche 1 bis 8, wobei eine Sensoreinrichtung (66) vorgesehen ist, die in der Übergabeposition mittels einer Hilfsspannung ermittelt, ob ein Bauteil (22) in dem Bauteilhalter (38) vorhanden ist.

10. Verfahren zum Zuführen eines Bauteils (22) zu einem Bauteilhalter (38) und zum Fügen des Bauteils (22) entlang einer Fügeachse (36) auf ein Werkstück (24), mit den Schritten:
- Verschwenken eines Klappelements (37) an einem Schlitten (32) in eine Übergabeposition (60), in der der Bauteilhalter (38) mit einem Zuführkanal (58) ausgerichtet ist, und zwar um eine Schwenkachse (40) herum, die quer zu der Fügeachse (36) ausgerichtet ist und windschief zu der Fügeachse (36) verläuft; d.h. die Fügeachse und die Schwenkachse schneiden somit einander nicht und verlaufen nicht parallel zueinander; und wobei ein Übergang einer Schweißstromleitung (53) von dem Schlitten (32) zu dem Klappelement (37) derart ausgebildet ist, dass die Schweißstromleitung (53) getrennt ist, wenn sich der Bauteilhalter (38) in der Übergabeposition befindet, und geschlossen ist, wenn sich der Bauteilhalter (38) in einer Fügeposition befindet;
- Zuführen des Bauteils (22) durch den Zuführkanal (58) hindurch in den Bauteilhalter (38);
- Verschwenken des Klappelements (37) in eine Fügeposition; und
- Durchführen eines Fügevorganges, wobei der Schlitten (32) parallel zu der Fügeachse (36) verfahren wird.

11. Verfahren nach Anspruch 10, wobei das Zuführen des Bauteils (22) durch den Zuführkanal (58) hindurch in den Bauteilhalter (38) unterbrechungsfrei erfolgt.

12. Verfahren nach Anspruch 10, wobei dann, wenn der Bauteilhalter (38) in die Fügeposition verschwenkt wird, ein weiteres Bauteil (22) an der Übergabeposition (60) vorgehalten wird.

13. Verfahren nach einem der Ansprüche 10 bis 12, wobei vor dem Schritt des Verschwenkens des Klappelements (37) in die Fügeposition ein Schritt des Überprüfens, ob ein Bauteil (22) in dem Bauteilhalter (38) vorhanden ist, durchgeführt wird.

## Revendications

1. Agencement de tête d'assemblage (20) pour assembler des composants (22) à des pièces (24), comprenant un boîtier (30) est un chariot (32) qui est monté sur le boîtier (30) et qui peut être déplacé parallèlement à un axe d'assemblage (36) par rapport au boîtier (30), et comprenant au moins un dispositif de maintien de composant (38) sur lequel un composant (22) peut être maintenu de manière concentrique à l'axe d'assemblage (36) pendant une opération d'assemblage, le dispositif de maintien de composant (38) étant agencé sur un élément articulé (37) qui peut pivoter sur le chariot (32) autour d'un axe de pivotement (40) qui est orienté transversalement à l'axe d'assemblage (36), l'axe de pivotement (40) étant oblique par rapport à l'axe d'assemblage (36), c'est-à-dire que l'axe de pivotement (40) et l'axe d'assemblage (36) ne se croisent pas l'un l'autre et ne s'étendent pas parallèlement l'un à l'autre, un passage d'acheminement (58) étant fixé au boîtier (30), **caractérisé en ce que** l'élément articulé (37) peut être pivoté d'environ 180° entre la position d'assemblage et l'emplacement de transfert (60) dans lequel le dispositif de maintien de composant (38) est aligné sur le passage d'acheminement (58), et une transition d'une ligne de courant de soudage (53) du chariot (32) à l'élément articulé (37) est conçue d'une manière telle que la ligne de courant de soudage (53) soit déconnectée lorsque le dispositif de maintien de composant (38) est situé dans la position de transfert et fermée lorsque le dispositif de maintien de composant (38) est situé dans une position d'assemblage.

2. Agencement de tête d'assemblage selon la revendication 1, dans lequel au moins un dispositif d'acheminement (42) pour l'acheminement du composant (22) est prévu, le composant (22) étant transféré en un emplacement de transfert (60) du dispositif d'acheminement (42) au dispositif de maintien de composant (38), et dans lequel l'axe d'assemblage (36) s'étend d'une manière telle que le dispositif de maintien de composant (38) puisse être pivoté entre l'emplacement de transfert (60) et une position d'assemblage.

3. Agencement de tête d'assemblage selon la revendication 1 ou 2, dans lequel l'emplacement de transfert (60) est fixe par rapport au boîtier (30) ou au chariot (32).

4. Agencement de tête d'assemblage selon l'une des revendications 1 à 3, dans lequel une tige (62) est montée à rotation sur le chariot (32), l'élément articulé (37) étant fixé à ladite tige (62).

5. Agencement de tête d'assemblage selon l'une des revendications 1 à 4, dans lequel un dispositif d'entraînement (64) pour faire tourner l'élément articulé (37) est fixé au chariot (32).

6. Agencement de tête d'assemblage selon la revendication 5, dans lequel le dispositif d'entraînement (64') a un moteur électrique.

7. Agencement de tête d'assemblage selon la revendication 6, dans lequel le moteur électrique (64') est agencé de manière concentrique à la tige (62).

8. Agencement de tête d'assemblage selon la revendication 1, dans lequel la transition est produite au moyen d'un contact (55) précontraint par ressort en direction de l'élément articulé (37).

9. Agencement de tête d'assemblage selon l'une des revendications 1 à 8, dans lequel un dispositif de capteur (66) est prévu, lequel, dans la position de transfert, détermine au moyen d'une tension auxiliaire si un composant (22) est présent dans le dispositif de maintien de composant (38).

10. Procédé d'acheminement d'un composant (22) à un dispositif de maintien de composant (38) et d'assemblage du composant (22), le long d'un axe d'assemblage (36), à une pièce (24), **caractérisé par** les étapes consistant à :
- pivoter un élément articulé (37) sur un chariot (32) d'environ 180° jusqu'à une position de transfert (60) dans laquelle le dispositif de maintien de composant (38) est aligné sur un passage d'acheminement (58), autour d'un axe de pivotement (40) pour être précis, lequel axe de pivotement est orienté transversalement à l'axe d'assemblage (36) et est oblique par rapport à l'axe d'assemblage (36) ; c'est-à-dire que l'axe de pivotement (40) et l'axe d'assemblage (36) ne se croisent pas l'un l'autre et ne s'étendent pas parallèlement l'un à l'autre ; et une transition d'une ligne de courant de soudage (53) du chariot (32) à l'élément articulé (37) étant conçue d'une manière telle que la ligne de courant de soudage (53) soit déconnectée lorsque le dispositif de maintien de composant (38) est situé dans la position de transfert et fermée lorsque le dispositif de maintien de composant (38) est situé dans une position d'assemblage ;
- acheminer le composant (22) à travers le passage d'acheminement (58) à l'intérieur du dispositif de maintien de composant (38) ;
- pivoter l'élément articulé (37) d'environ 180° jusqu'à la position d'assemblage ; et
- effectuer une opération d'assemblage, le chariot (32) étant déplacé parallèlement à l'axe d'assemblage (36).

11. Procédé selon la revendication 10, dans lequel le composant (22) est acheminé en continu à travers le passage d'acheminement (58) à l'intérieur du dispositif de maintien de composant (38).

12. Procédé selon la revendication 10, dans lequel, lorsque le dispositif de maintien de composant (38) est pivoté jusqu'à la position d'assemblage, un composant supplémentaire (22) est tenu à disposition à la position de transfert (60).

13. Procédé selon l'une des revendications 10 à 12, dans lequel, avant l'étape de pivotement de l'élément articulé (37) jusqu'à la position d'assemblage, une étape pour vérifier si un composant (22) est présent dans le dispositif de maintien de composant (38) est effectuée.
